# EUROPÄISCHE PATENTANMELDUNG

(11) **EP 1 388 462 A2**
(43) Veröffentlichungstag der Anmeldung: **11.02.2004**
(21) Anmeldenummer: 03102331.0
(22) Anmeldetag: 29.07.2003
(51) Int. Cl.: B60Q 1/12, B60Q 1/076

(54) **Stelleinrichtung und Stellverfahren für eine Lichteinheit eines Kraftfahrzeuges**

(30) Priorität: 10.08.2002 DE 10236824; 20.06.2003 DE 10327631
(71) Anmelder: Hella KG Hueck & Co., 59552 Lippstadt (DE)
(72) Erfinder: Himmler, Andreas, 33098 Paderborn (DE); Müller, Björn, 59558 Lippstadt (DE)

(57) **Zusammenfassung**

Die Erfindung betrifft eine Stelleinrichtung (1) für eine Lichteinheit (2) eines Kraftfahrzeuges, wobei ein Schwenkteil (7) der Lichteinheit mittels einer gekoppelten Stelleinheit (8) um eine Schwenkachse (3) schwenkbar angeordnet ist, wobei die Stelleinheit (8) als eine elektrodynamische Schwenkaktuatoreinheit ausgebildet ist.

## Beschreibung

Die Erfindung betrifft eine Stelleinrichtung für eine Lichteinheit eines Kraftfahrzeuges, wobei ein Schwenkteil der Lichteinheit mittels einer gekoppelten Stelleinheit um eine Schwenkachse schwenkbar angeordnet ist.

Die Erfindung betrifft ferner ein Verfahren zum Verschwenken einer Lichteinheit um eine Schwenkachse, wobei eine mit der Lichteinheit gekoppelte Stelleinheit angesteuert wird.

Aus der EP 1 149 731 A2 ist eine Stelleinrichtung für eine Lichteinheit bekannt, bei der eine Stelleinheit auf ein fest mit der Lichteinheit verbundenes kreisausschnittförmiges Schwenkteil einwirkt. Die Stelleinheit ist durch einen Schrittmotor gebildet, dessen Antriebswelle durch Verzahnung mit dem bogenförmigen Rand verbunden ist.

Aufgabe der vorliegenden Erfindung ist es, eine Stelleinrichtung für eine Lichteinheit eines Kraftfahrzeuges derart weiterzubilden, dass die Sicherheit und Langzeitstabilität bei der Einstellung von Lichtfunktionen wie z. B. Kurvenlichtfunktion weiter verbessert wird.

Ferner ist es Aufgabe der vorliegenden Erfindung, ein Verfahren zum Verschwenken einer Lichteinheit anzugeben, so dass der Aufwand und die Kosten für die Ansteuerung einer zu verschwenkenden Lichteinheit verringert wird.

Zur Lösung dieser Aufgabe ist die erfindungsgemäße Stelleinrichtung in Verbindung mit dem Oberbegriff des Patentanspruchs 1 dadurch gekennzeichnet, dass die Stelleinheit als eine elektrodynamische Schwenkaktuatoreinheit ausgebildet ist.

Der Vorteil der erfindungsgemäßen Stelleinrichtung besteht insbesondere darin, dass eine berührungslose Kopplung der Stelleinheit mit einem Schwenkteil der Lichteinheit geschaffen ist. Zum einen kann hierdurch das Auftreten von Reibung vermieden werden, so dass keine Wirkungsgradverluste entstehen. Zum anderen kann ein sicherer und langzeitstabiler Betrieb der Stelleinrichtung gewährleistet werden. Grundgedanke der Erfindung ist es, zeitlich veränderliche elektromagnetische Felder zur Erzeugung einer Bewegung auszunutzen. Durch Ansteuerung einer stromdurchflossenen Spule in Verbindung mit einem Permanentmagneten oder einer weiteren stromdurchflossenen Spule kann somit eine Schwenkbewegung um eine vorgegebene Verschwenkachse erzeugt werden.

Nach einer besonderen Ausführungsform der Erfindung ist die Schwenkaktuatoreinheit als elektrodynamischer Motor, vorzugsweise als Tauchspulmotor, ausgebildet. Hierdurch kann auf einfache Weise direkt auf das Schwenkteil der Lichteinheit eingewirkt werden.

Nach einer Weiterbildung der Erfindung ist eine stromdurchfließbare Spule in dem Schwenkteil integriert ausgebildet, so dass der Platzbedarf relativ gering ist.

Nach einer Weiterbildung der Erfindung ist die stromdurchfließbare Spule mit einer elektrischen Steuereinrichtung verbunden, die in die Spule einen elektrischen Strom vorgegebener Stromstärke einspeist. Hierdurch kann im Zusammenwirken mit dem Permanentmagneten ein zu der Stromstärke proportionales Drehmoment zum Verschwenken der Lichteinheit erzeugt werden. Zur Erreichung der Zielposition des Schwenkteils weist die elektrische Steuereinrichtung vorzugsweise eine Regelschaltung auf.

Nach einer Weiterbildung der Erfindung ist der Lichteinheit eine Federrückstelleinrichtung zugeordnet, so dass bei Stromausfall jederzeit die ursprüngliche Nulllage der Lichteinheit eingenommen werden kann.

Zur Lösung der Aufgabe ist das erfindungsgemäße Verfahren in Verbindung mit dem Oberbegriff des Patentanspruchs 16 dadurch gekennzeichnet, dass ein Istlagewert eines Regelungssystems zu jedem vorgegebenen Zeitpunkt erkannt wird, dass eine Differenz des Istlagewertes mit einem Solllagewert berechnet wird, dass eine manipulierte Stellgröße auf der Grundlage dieser Differenz erzeugt wird, um so ein geregeltes System bereitzustellen zur Ansteuerung der Stelleinheit und zur Positionierung des Schwenkteils entsprechend des vorgegebenen Solllagewertes.

Der besondere Vorteil des erfindungsgemäßen Verfahren besteht darin, dass durch die Kombination einer als Motor ausgebildeten Stelleinheit und einer Regeleinheit zur Ansteuerung der Stelleinheit ein sehr einfacher, robuster und kostengünstiger mechanischer und elektrischer Aufbau gewährleistet ist. Die Stelleinheit bildet einen Direktantrieb, dem kein Getriebe vorgelagert ist. Fertigungs- und Kostenaufwand können hierdurch verringert werden.

Nach einer Weiterbildung der Erfindung weist die Regeleinheit eine Recheneinheit enthaltend einen Mikroprozessor und einen Speicher mit einem Lagerregelungsprogramm auf, so dass in Abhängigkeit von der Regelstrecke variabel die Regelparameter verändert werden können. Dadurch, dass das Lagerregelungsprogramm als Software vorliegt, kann nach einmaliger Entwicklung dieses Programms der Fertigungsaufwand reduziert werden.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1:: eine schematische Seitenansicht einer Lichteinheit,
- Figur 2:: eine schematische Draufsicht auf die Lichteinheit,
- Figur 3:: eine schematische Darstellung der Stelleinrichtung nach einer ersten Ausführungsform,

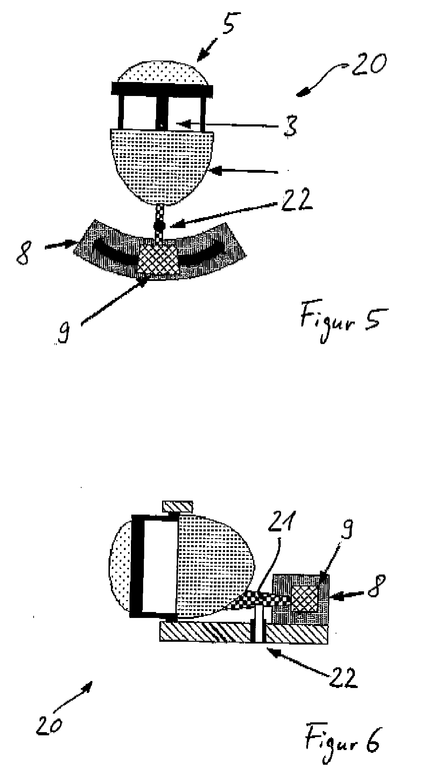

- Figur 4:: eine schematische Darstellung der Stelleinrichtung nach einer zweiten Ausführungsform,
- Figur 5:: eine schematische Draufsicht auf eine Lichteinheit nach einer weiteren Ausführungsform,
- Figur 6:: eine schematische Seitenansicht der Lichteinheit nach Figur 5,
- Figur 7:: ein Blockschaltbild eines Regelungssystems für die schwenkbare Lichteinheit und
- Figur 8:: ein Blockschaltbild einer Regeleinheit des Regelungssystems.

Eine erfindungsgemäße Stelleinrichtung 1 findet vorzugsweise Anwendung zum Verschwenken einer Lichteinheit 2 eines Kraftfahrzeuges. Hierdurch wird die Einstellung eines Kurvenlichtes ermöglicht, bei dem die als Scheinwerfer ausgebildete Lichteinheit 2 entsprechend eines Lenkwinkels des Fahrzeuges während einer Kurvenfahrt um eine vertikale Verschwenkachse 3 verschwenkt wird.

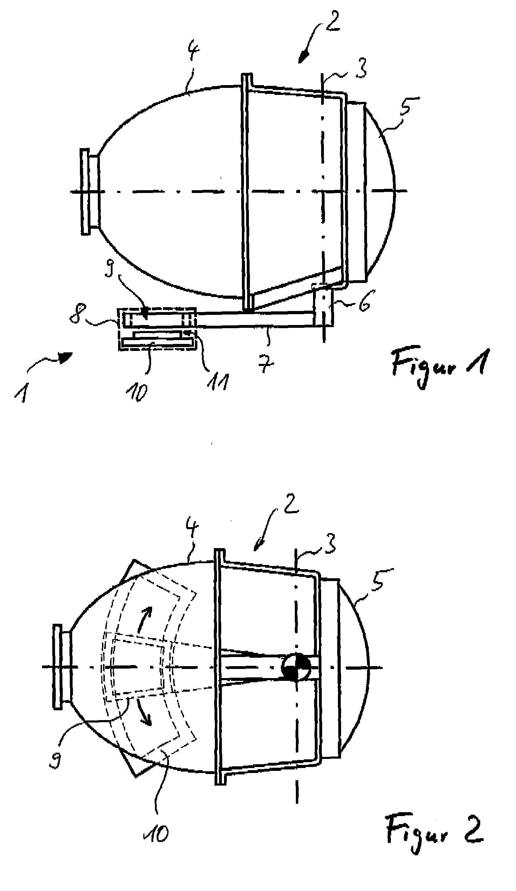

Wie aus Figur 1 zu ersehen ist, kann die Lichteinheit 2 als ein bekanntes Projektions-Modul 2 ausgebildet sein mit einem Reflektor 4, in dem eine nicht dargestellte Lichtquelle und eine Blende angeordnet sind, sowie eine dem Funktionsprinzip des Projektionssystems entsprechend angeordnete Linse 5.

An einer Unterseite des Scheinwerfers 2 ragt ein koaxiale zur Verschwenkachse 3 abragender Fuß 6 ab, von dem sich in horizontaler Richtung ein Schwenkteil 7 entgegen der Lichtaustrittsrichtung erstreckt. Das Schwenkteil 7 ist als kreisausschnittförmiger Schwenkarm ausgebildet, an dessen freien Ende eine Stelleinheit 8 angeordnet ist.

Die Stelleinheit 8 ist als eine elektrodynamische Schwenkaktuatoreinheit ausgebildet, vorzugsweise als ein Tauchspulmotor. Sie wird gebildet zum einen durch eine stromdurchflossene Spule 9, die an dem Ende des Schwenkteils 7 integriert bzw. befestigt ist, und zum anderen durch einen feststehenden Permanentmagneten 10, der über einen Arbeitsluftspalt 11 von der Spule 9 beabstandet ist.

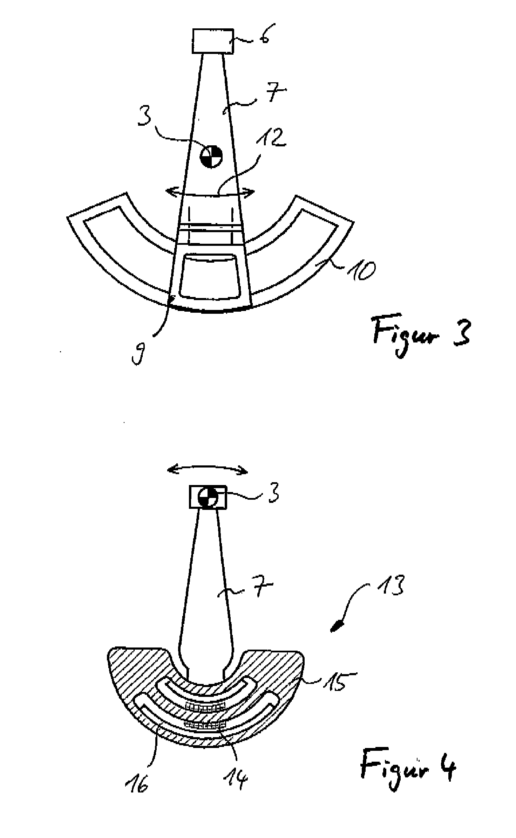

Wie besser aus Figur 3 zu ersehen ist, ist der Permanentmagnet 10 kreisringausschnittförmig ausgebildet, wobei der Ausschnittwinkel den Maximalwert eines Schwenkwinkels 12 bestimmt. Der Permanentmagnet 10 ist an einer kreisbogenförmig ausgebildeten Grundplatte 10' befestigt. Die Spule 9, die eine Mehrzahl von Windungen aufweist und an dem freien Ende des Schwenkarms 7 befestigt ist, erzeugt bei Stromdurchfluss ein senkrecht zu dem Magnetfeld des Permanentmagneten 10 orientiertes Magnetfeld, so dass eine Drehkraft erzeugt wird, die den Schwenkarm 7 um die Verschwenkachse 3 verdreht.

Nach einer ersten Ausführungsform der Stelleinheit 8 kann die stromdurchflossene Spule 9 als eine Flachspule ausgebildet sein, siehe Figur 3. Hierdurch hat die Stelleinheit 8 einen relativ flachen und platzsparenden Aufbau.

Nach einer alternativen Ausführungsform einer Stelleinheit 13 kann eine Kastenspule 14 vorgesehen sein, die auf einer mit bogenförmigen Schlitzen versehene Grundplatte 15 befestigt ist. Die Kastenspule 14 kann einen Eisenkern aufweisen und wirkt mit einem kreisringausschnittförmigen Permanentmagneten 16 zusammen.

Wie aus Figur 2 und 3 zu ersehen ist, kann die Verschwenkachse 3 an einem zu der Stelleinheit 8 gegenüberliegenden Ende des Schwenkarms 7 oder in einem mittleren Bereich des Schwenkteils 7 angeordnet sein. Durch die Anordnung des Fußes 6 im mittleren Bereich des Schwenkarms 7 gemäß Figur 3 kann der Schwenkwinkelbereich erheblich vergrößert werden.

Zur Ansteuerung der Stelleinheit 8 ist diese mit einer nicht dargestellten elektrischen Steuereinrichtung verbunden. Die elektrische Steuereinrichtung umfaßt eine Regeleinheit, die in Abhängigkeit von einem mittels eines Sensors detektierten aktuellen Schwenkwinkels des Schwenkarmes 7 einerseits und von einem vorgegebenen Sollschwenkwinkel andererseits ein Steuersignal erzeugt, das auf die Spule 9 einwirkt. Das Steuersignal ist vorzugsweise als ein elektrischer Stromstärkewert ausgebildet, der in die Spule 9 eingespeist wird. Proportional zur elektrischen Stromstärke wird somit ein Verschwenk-Drehmoment erzeugt, dass den Schwenkarm 7 um die Verschwenkachse 3 verdreht. Als Gegendrehmoment wirkt vorzugsweise eine mechanische Federeinrichtung, die bei Nichtbeaufschlagung der Spule 9 mit Strom den Schwenkarm 7 in die Ausgangslage zurückbewegt. Auf diese Weise ist stets sichergestellt, dass bei einem Stromausfall der Schweinwerfer 2 zurück in die Ausgangslage bewegt wird.

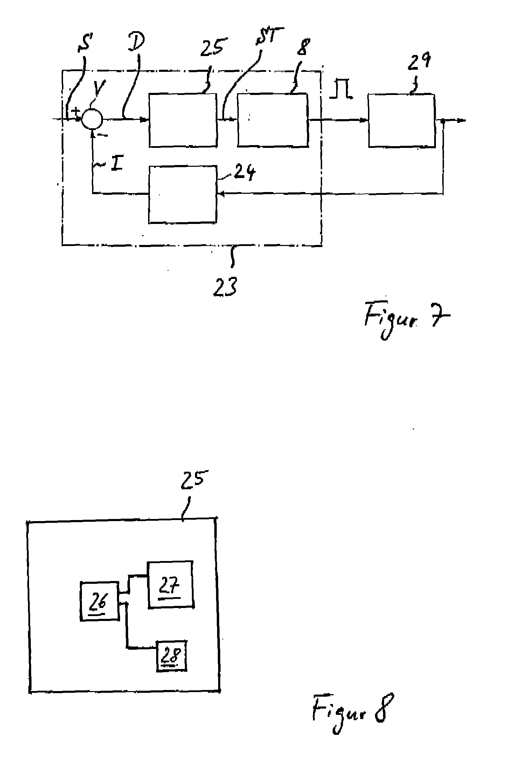

In Figur 5 und 6 ist eine Lichteinheit 20 dargestellt, die im wesentlichen mit der Lichteinheit 2 gemäß Figur 1 und 2 übereinstimmt. Gleiche Bauteile sind daher mit den gleichen Bezugsziffern versehen.

Im Unterschied zu der Lichteinheit 2 weist die Lichteinheit 20 ein Schwenkteil 21 auf, das in einem mittleren Teil einen bistabilen Aktuator 22 enthält, der bei Verlust der Stromversorgung das Schwenkteil 21 in die Mittelposition verbringt und dort arretiert (Fail-safe-Fall). Der bistabile mechanische Aktuator kann als ein Exzenter ausgeführt sein, der in einer senkrecht zur Bewegungsrichtung des Tauchspulmotors angeordneten Ebene drehbar ist. Im Fail-safe-Fall wird der Teil des Exzenters mit dem größeren Radius gegen das Schwenkteil 21 gedrückt - vorzugsweise in eine Nut des Schwenkteils 21. Hierdurch verriegelt der Exzenter 22 durch Selbsthemmung das Schwenkteil 21 der Lichteinheit 20.

Zur Betätigung des Aktuators 22 ist ein Energiespeicher vorgesehen mit einer ausreichenden Energiereserve, wie zum Beispiel ein Kondensator oder ein Akkumulator, so dass nach Ausfall der Versorgungsspannung das Schwenkteil 21 aus einer beliebigen Schwenkposition in die gewünschte Nulllage/Mittellage verbringbar ist.

In Figur 7 ist die Funktionsweise einer Regeleinheit 23, die bei den vorgenannten Lichteinheiten 2, 22 zur Anwendung kommt, dargestellt. Im übrigen dient die Regeleinheit 23 nicht nur zur Lagerregelung von Kraftfahrzeugscheinwerfern. Sie kann auch die Bewegung von Schwenkteilen anderer Scheinwerfer, wie zum Beispiel für die Gebäudebeleuchtung oder für Show-Licht, eingesetzt werden.

Ein Solllagewert S kann durch einen Lenkwinkel des Fahrzeugs bei einer Kurvenfahrt vorgegeben werden. In einem Vergleicher V wird aus dem Solllagewert S und einem Istlagewert l, der durch einen Lagesensor 24 ermittelt wird, ein Differenzlagewert D ermittelt. Der Differenzlagewert D wird als Eingangsgröße auf eine Recheneinheit 25 der Regeleinheit 23 gegeben, in der unter Verarbeitung durch einen Mikroprozessor 26 und einem Lageregelungsprogramm 27, das in einem Speicher der Recheneinheit 25 abgespeichert ist, eine manipulierte Stellgröße ST berechnet wird. Die Stellgröße ST kann als ein gepulsterAnsteuerungsstrom ausgebildet sein, der durch Pulsbreitenmodulation (PBM) gebildet wird.

Die Stellgröße ST wird dann als Eingangsgröße auf die Stelleinheit 8 gegeben, die vorzugsweise als Tauchspulmotor ausgebildet ist. Der Tauchspulmotor 8 verfügt über eine lineare Kennlinie, ist hysteresefrei und weist Bauteile einfacher Bauform auf. Als Bauteile dienen im wesentlichen die stromdurchflossene Spule 9 und der Permanentmagnet 10.

Als Stellgrößen dienen zum einen die Stromstärke und zum anderen die elektrische Spannung. Die Stromstärke bestimmt die Beschleunigung der Bewegung des Schwenkteils 21. Die Polarität der Spannung bestimmt die Bewegungsrichtung des Schwenkteils 21.

Damit das Schwenkteil 21 in der vorgegebenen Position gehalten wird, ist eine Halterregelungseinheit 28 vorgesehen, die durch Kommutierung des Ansteuerstromes der Leiterschleife 9 mit einer entsprechenden Frequenz stets dafür sorgt, dass ein Gleichgewicht mit den Gegendrehmomenten eintritt. Die Halteregelungseinheit 28 ist Bestandteil der Regeleinheit 23. Sie kann durch ein gesondertes Halteregelungsprogramm 28 gebildet sein, das begonnen wird, sobald sich das Schwenkteil 21 in der vorgegebenen Position befindet. Hierbei würde das Halteregelungsprogramm eine Feinregelung durchführen.

Nach einer alternativen Ausführungsform kann das Halteregelungsprogramm 28 auch in dem Lagerregelungsprogramm 27 integriert sein. Vorzugsweise sind die Regelungsprogramme als objektorientierte Programme ausgestaltet, so dass eine flexible und erweiterbare Programmierung ermöglicht ist.

Eine der Stelleinheit 13 nachgeordnete Regelstrecke 29 wird durch die Lichteinheit 2, 20 bzw. des Schwenkteils 7, 21 gebildet. Die aktuelle Lage (Schwenkwinkel) des Schwenkteils 7, 21 wird durch einen Lagesensor 30 aufgenommen, der funktionsmäßig zur Regeleinheit 23 gehört. Der Ausgang des Lagesensors 24 wird durch den Istlagewert I gebildet, der auf den Vergleicher V gegeben wird.

Unter Zuhilfenahme der Regeleinheit 23 wird ein digitales Regelungssystem erzeugt, dass eine betriebssichere und einfache Regelung der Lage des Schwenkteils 7, 21 ermöglicht.

## Patentansprüche

1. Stelleinrichtung für eine Lichteinheit eines Kraftfahrzeuges, wobei ein Schwenkteil der Lichteinheit mittels einer gekoppelten Stelleinheit um eine Schwenkachse schwenkbar angeordnet ist, **dadurch gekennzeichnet, dass** die Stelleinheit (8, 13) als eine elektrodynamische Schwenkaktuatoreinheit ausgebildet ist.

2. Stelleinrichtung nach Anspruch 1, **dadurch gekennzeichnet, dass** die Schwenkaktuatoreinheit (8, 13) als ein elektrodynamischer Motor ausgebildet ist.

3. Stelleinrichtung nach Anspruch 1 oder 2, **dadurch gekennzeichnet, dass** der elektrodynamische Motor (8, 13) als ein Tauchspulmotor ausgebildet ist.

4. Stelleinrichtung nach einem der Ansprüche 1 bis 3, **dadurch gekennzeichnet, dass** eine stromdurchfließbare Spule (9) der Schwenkaktuatoreinheit (8, 13) in bzw. an dem Schwenkteil (7) integriert und/oder befestigt angeordnet ist.

5. Stelleinrichtung nach einem der Ansprüche 1 bis 4, **dadurch gekennzeichnet, dass** die Lichteinheit (2) fest mit dem Schwenkteil (7) verbunden ist und dass an dem freien Ende des Schwenkteils (7) eine stromdurchfließbare Spule oder ein Permanentmagnet angeordnet ist.

6. Stelleinrichtung nach einem der Ansprüche 1 bis 5, **dadurch gekennzeichnet, dass** das Ende des Schwenkteils (7) mit einem feststehenden Permanentmagneten (10, 16) oder einer feststehenden stromdurchfließbaren Spule zusammenwirkt.

7. Stelleinrichtung nach einem der Ansprüche 1 bis 6, **dadurch gekennzeichnet, dass** der Permanentmagnet (10, 16) und/oder die stromdurchfließbare Spule kreisringausschnittförmig ausgebildet ist.

8. Stelleinrichtung nach einem der Ansprüche 1 bis 7, dadurch gekemzeichnet, dass die stromdurchfließbare Spule (9) mit einer elektrischen Steuereinrichtung verbunden ist, mittels derer ein elektrischer Strom vorgegebener Stromstärke in die Spule (9) einspeisbar ist.

9. Stelleinrichtung nach einem der Ansprüche 1 bis 8, dadurch gekemzeichnet, dass das Schwenkteil (7) mittels einer Federeinrichtung in einer Ausgangslage rückstellbar ist.

10. Verwendung der Stelleinrichtung nach einem der Ansprüche 1 bis 9 zur Erzeugung einer Kurvenlichtfunktion.

11. Stelleinrichtung nach einem der Ansprüche 1 bis 10, **dadurch gekennzeichnet, dass** eine Regeleinheit (23) zur Lageregelung des Schwenkteils (7, 21) vorgesehen ist.

12. Stelleinrichtung nach einem der Ansprüche 1 bis 11, **dadurch gekennzeichnet, dass** die Regeleinheit (23) einen Mikroprozessor (26) und einen Speicher umfasst, in dem ein Lagerregelungsprogramm (27) gespeichert ist.

13. Stelleinrichtung nach einem der Ansprüche 1 bis 12, **dadurch gekennzeichnet, dass** die Regeleinheit (23) eine Halteregelungseinheit (28) aufweist, derart, dass das Schwenkteil (7, 21) stets in der gewünschten Sollwinkellage gehalten ist.

14. Stelleinrichtung nach einem der Ansprüche 1 bis 13, **dadurch gekennzeichnet, dass** dem Schwenkteil (7, 21) ein Energiespeicher (22) zugeordnet ist, derart, dass bei Ausfall der Spannungsversorgung das Schwenkteil stets in eine vorgegebene Nulllage verbracht wird.

15. Stelleinrichtung nach einem der Ansprüche 1 bis 14, **dadurch gekennzeichnet, dass** dem Schwenkteil (7, 21) ein Aktuator (22) zugeordnet ist, mittels dessen das Schwenkteil (7, 21) bei Ausfall der Spannungsversorgung selbsttätig in eine vorgegebene Nulllage verbracht und in derselben arretiert wird.

16. Verfahren zum Verschwenken einer Lichteinheit um eine Schwenkachse, wobei eine mit der Lichteinheit gekoppelte Stelleinheit angesteuert wird, **dadurch gekennzeichnet, dass** ein Istlagewert (l) eines Regelungssystems zu jedem vorgegebenen Zeitpunkt erkannt wird, dass eine Differenz (D) des Istlagewertes (I) mit einem Solllagewert (S) berechnet wird, dass eine manipulierte Stellgröße (ST) auf der Grundlage dieser Differenz (D) erzeugt wird, um so ein geregeltes System bereitzustellen zur Ansteuerung der Stelleinheit (13) und zur Positionierung des Schwenkteils (7, 21) entsprechend des vorgegebenen Solllagewertes (S).

17. Verfahren nach Anspruch 16, **dadurch gekennzeichnet, dass** die Stellgröße (ST) in einer digitalen Recheneinheit (25) entsprechend einem vorgegebenen Lagerregelungsprogramms (27) berechnet wird und dann der Stelleinheit (13) zugeführt wird.

18. Verfahren nach Anspruch 16 oder 17, **dadurch gekennzeichnet, dass** als Stellgröße (ST) ein Ansteuerungsstrom in gepulster Form ausgegeben wird.

19. Verfahren nach einem der Ansprüche 16 bis 18, **dadurch gekennzeichnet, dass** die Stellgröße mit einer Pulsbreitenmodulation (PBM) moduliert wird.

20. Verfahren nach einem der Ansprüche 16 bis 19, **dadurch gekennzeichnet, dass** die Stellgröße (ST) durch einen elektrischen Spannungswert und einen Stromstärkewert gebildet wird.

21. Verfahren nach einem der Ansprüche 16 bis 20, **dadurch gekennzeichnet, dass** die Stellgröße (ST) nach Erreichen des Schwenkteils (7, 21) in die vorgegebene Position derart berechnet wird, dass das Schwenkteil (7, 21) in der vorgegebenen Position gehalten wird.
